(19) **Europäisches Patentamt / European Patent Office / Office européen des brevets**

(11) **EP 4 184 351 A1**

(12) # EUROPEAN PATENT APPLICATION
published in accordance with Art. 153(4) EPC

(43) Date of publication:
**24.05.2023 Bulletin 2023/21**

(21) Application number: **21846177.0**

(22) Date of filing: **22.07.2021**

(51) International Patent Classification (IPC):
**G06F 18/00** (2023.01)    **G06V 10/40** (2022.01)
**G06N 3/08** (2023.01)    **G06T 5/00** (2006.01)
**G06T 7/11** (2017.01)

(86) International application number:
**PCT/KR2021/009480**

(87) International publication number:
**WO 2022/019675 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.07.2020 KR 20200091781**

(71) Applicant: **Urbanbase Inc.**
**Seoul 06614 (KR)**

(72) Inventors:
• **YUN, Dae Hee**
  **Seoul 02008 (KR)**
• **BAEK, Yunah**
  **Anyang-si, Seoul 14070 (KR)**
• **KIM, Seunghyun**
  **Seoul 07283 (KR)**

(74) Representative: **BCKIP Part mbB**
**Siegfriedstraße 8**
**80803 München (DE)**

(54) ## SYMBOL ANALYSIS DEVICE AND METHOD INCLUDED IN FACILITY FLOOR PLAN

(57)    An apparatus of analyzing a mark in a facility floor plan performs acquiring a plurality of facility floor plans, detecting respective rectangles included in the plurality of facility floor plans and an arc connected to the rectangles, specifying a window region and a door region based on the rectangle and the arc, labeling a pixel of the specified window region with a class of a window and labeling a pixel of the specified door region with a class of a door, and generating a neural network model for determining positions and classes of the window and the door included in the facility floor plan based on the correlation.

Fig.1

**Description**

TECHNICAL FIELD

The present disclosure relates to an apparatus and method of analyzing a mark in a facility floor plan.

BACKGROUND

As a method of acquiring existing 3D spatial information, there is a photo taking method using a panoramic camera. This has a problem in that in order to obtain 3D spatial information, it is necessary to directly visit a corresponding place to take a picture, and that there is a risk of invasion of privacy because objects of an actual place taken in the picture are exposed. In addition, photographing using a panoramic camera is expensive, and the captured image is configured with 2D image data, and thus there is a problem in that it is impossible to extract and utilize physical information about a real space.

In addition, there is a method of producing a 3D modeling file in which existing 3D spatial information is obtained by a manual method. This has a problem in that it is expensive due to a labor cost and takes a long time for manufacture because professional manpower needs to directly perform modeling.

Accordingly, as a technology for automatically extracting 3D space information from information on a 2D floor plan without directly photographing a 3D space, there is Korean Patent No. 10-1638378 (3D automatic modeling methods and program based on 2D drawing). Korean Patent Publication No. 10-1638378 provides highly reliable 3D spatial information because 3D modeling is performed based on spatial information and numerical values presented in a 2D floor plan.

However, in the floor plan, both marks of a window and a door are configured in a rectangular shape. Conventionally, in the case in which labeling is performed with a bounding box for learning a neural network that automatically distinguishes the marks of these window and door, there is a limit in that the bounding box needs to be manually specified and then labeled, and that labeling is performed only in the form of a rectangle in which it is not possible to rotate the bounding box.

Due to this limitation, if the marks of the door and the window are arranged diagonally on the floor plan, or if the marks of the door and the window are arranged adjacent to other marks, it is not possible to perform accurate labeling, and thus it is difficult to improve the accuracy of neural network learning.

SUMMARY

An object of embodiments of the present disclosure is to provide a technology for improving the accuracy of learning for distinguishing a window and a door in a floor plan by automatically distinguishing marks of the door and the window on the floor plan and labeling distinguish door and window regions.

However, the technical problems solved by the embodiments may not be limited to the above technical problems and may be variously expanded without are departing from the spirit and scope of the present disclosure.

According to an embodiment of the present disclosure, an apparatus of analyzing a mark in a facility floor plan includes one or more memories configured to store commands for performing a predetermined operation, and one or more processors operatively connected to the one or more memories and configured to execute the commands, wherein an operation perform by the processor includes acquiring a plurality of facility floor plans, detecting respective rectangles included in the plurality of facility floor plans and an arc connected to the rectangles, specifying a window region and a door region based on the rectangle and the arc, labeling a pixel of the specified window region with a class of a window and labeling a pixel of the specified door region with a class of a door, and inputting the plurality of facility floor plans and data labeled in units of pixels to a neural network model designed based on a predetermined image segmentation algorithm, learning a weight of the neural network model that derives a correlation between classes of the window and the door included in the plurality of facility floor plans and a positioned of the labeled pixel, and generating a neural network model for determining positions and classes of the window and the door included in the facility floor plan based on the correlation.

The detecting may include converting all part except for black included in the facility floor plan into white, and detecting the rectangle and the arc based on an outline connecting a line segment configured with black or a border of a white region.

The detecting may further include removing a character from the facility floor plan.

The converting may include maintaining RGB information for a pixel of which RGB information is (0, 0, 0) of pixels included in the facility floor plan and converting the RGB information of the pixels included in the facility floor plan into (255, 255, 255) but not (0, 0, 0).

The specifying the window region and the door region may include detecting a first rectangle connected to the arc among the rectangles as a door region, and detecting a second rectangle that is not connected to the arc among the rectangles as a window region.

The detecting as the door region may include detecting the first rectangle as the door region when a line segment connected to the first rectangle to define a perpendicular line and the arc is connected to an end of the first rectangle and an end of the line segment.

The specifying the window region and the door region may include removal from the detecting when an area of the rectangle is smaller than a preset value or is larger than a preset value.

The labeling may include labeling pixels of all regions except for the window and the door with a class of null.

The detecting may include generating a first floor plan by removing a character from the facility floor plan through an OCR detection algorithm, generating a second floor plan by converting pixel information of the first floor plan using Equations 1 and 2 below:

[Equation 1]

$$dst(I)=round(\max(0,\min(\alpha*src(I)-\beta,255)))$$

(src(I): element value before change of pixel information (x, y, z), $\alpha$: 10, $\beta$: -350, dst(I): element value after change of pixel information (x', y', z')), and

[Equation 2]
$$Y=0.5*R+0.3334*G+0.1667*B$$

(R: x' of (x', y', z') of dst(I) obtained from Equation 1, G: y' of (x', y', z') of dst(I) obtained from Equation 1, B: z' of (x', y', z') of dst(I) obtained from Equation 1, Y: one-dimensional element value), generating a third floor plan in which a part larger than a preset area or smaller than a preset area among rectangles configured with line segments constituting the second floor plan is displayed in black, generating a fourth floor plan by converting a pixel having a color element value of 0 or more and 30 or less, a saturation element value of 80 or more and 220 or less, and a brightness element value of 150 or more and 225 or less to white among pixels constituting the first floor plan, generating a fifth floor plan by applying a black region of the third floor plan and a white region of the fourth floor plan to the first floor plan, and generating a sixth floor plan by converting pixel information of the fifth floor plan using Equations 3 to 5 below:

[Equation 3]

$$dst(I)=round(\max(0,\min(\alpha*src(I)-\beta,255)))$$

(src(I): element value before change of pixel information (x, y, z), $\alpha$: 3, $\beta$: -350, dst(I): element value after change of pixel information (x', y', z')),

[Equation 4]

$$Y=0.5*R+0.3334*G+0.1667*B$$

(R: x' of (x', y', z') of dst(I) obtained from Equation 3, G: y' of (x', y', z') of dst(I) obtained from Equation 3, B: z' of (x', y', z') of dst(I) obtained from Equation 3, Y: one-dimensional element value), and

[Equation 5]

$$Y'=(Y<40,Y'=o \text{ or } Y\geq40,Y'=255)$$

(Y: one-dimensional element value obtained Equation 4), and generating an outline connecting borders of a white region of the sixth floor plan and detecting a rectangle.

The detecting may include generating a first floor plan by removing a character from the facility floor plan through an OCR detection algorithm, generating a seventh floor plan by converting pixel information of the second floor plan using Equations 6 to 8 below:

[Equation 6]

$$dst(I) = round(\max(0, \min(\alpha * src(I) - \beta, 255)))$$

(src(I): element value before change of pixel information (x, y, z), α: 57, β: -12500, dst(I): element value after change of pixel information (x', y', z')),

[Equation 7]

$$Y = 0.5 * R + 0.3334 * G + 0.1667 * B$$

(R: x' of (x', y', z') of dst(I) obtained from Equation 6, G: y' of (x', y', z') of dst(I) obtained from Equation 6, B: z' of (x', y', z') of dst(I) obtained from Equation 6, Y: one-dimensional element value), and

[Equation 8]

$$Y' = (Y = 0, Y' = o \text{ or } Y \neq 0, Y' = 255)$$

(Y: one-dimensional element value obtained Equation 7), generating an outline connecting borders of the white region of the sixth floor plan, and approximating the outline based on a Douglas-Peucker algorithm, detecting an outline corresponding to a convex hull among the approximated outlines, and detecting the outline as an arc when an area formed by the convex hull is within a predetermined range.

The generating the neural network model may include configuring the apparatus to input the plurality of facility floor plans to an input layer of a neural network designed based on a Mask R-CNN algorithm and input classes of a window and a door included in the plurality of facility floor plans and a position of the labeled pixel to an output layer, and learning a weight of a neural network that derives a correlation between the classes of the window and the door included in the plurality of facility floor plans and the position of the labeled pixel.

An embodiment of the present disclosure may include an apparatus including a neural network model generated by the apparatus.

According to an embodiment of the present disclosure, a method performed by an apparatus of analyzing a mark in a facility floor plan includes acquiring a plurality of facility floor plans, detecting respective rectangles included in the plurality of facility floor plans and an arc connected to the rectangles, specifying a window region and a door region based on the rectangle and the arc, labeling a pixel of the specified window region with a class of a window and labeling a pixel of the specified door region with a class of a door, and inputting the plurality of facility floor plans and data labeled in units of pixels to a neural network model designed based on a predetermined image segmentation algorithm, learning a weight of the neural network model that derives a correlation between classes of the window and the door included in the plurality of facility floor plans and a positioned of the labeled pixel, and generating a neural network model for determining positions and classes of the window and the door included in the facility floor plan based on the correlation.

## BRIEF DESCRIPTION OF THE DRAWINGS

FIG. 1 is an exemplary diagram of a facility floor plan.

FIG. 2 is a functional block diagram of an apparatus 100 for analyzing a mark in a facility floor plan according to an embodiment of the present disclosure.

FIGS. 3 to 5 are exemplary diagrams of an operation of detecting and labeling a door and a window by conversion for a facility floor plan by an apparatus for analyzing a mark in a facility floor plan according to an embodiment of the present disclosure.

FIG. 6 is an exemplary diagram showing the result of distinguishing a door and a window from a facility floor plan by a neural network model generated by an apparatus for analyzing a mark in the facility floor plan according to an embodiment of the present disclosure.

FIG. 7 is an exemplary diagram of a 3D drawing on which 3D modeling is performed from a 2D floor plan using a neural network model generated by an apparatus for analyzing a mark in the facility floor plan according to an embodiment of the present disclosure and the technology of Korean Patent No. 10-1638378.

FIG. 8 is a flowchart of a method of analyzing a mark in a facility floor plan according to an embodiment of the present disclosure.

## DETAILED DESCRIPTION

The attached drawings for illustrating exemplary embodiments of the present disclosure are referred to in order to gain a sufficient understanding of the present disclosure, the merits thereof, and the objectives accomplished by the implementation of the present disclosure. The present disclosure may, however, be embodied in many different forms and should not be construed as being limited to the embodiments set forth herein; rather, these embodiments are provided so that this disclosure will be thorough and complete, and will fully convey the concept of the present disclosure to one of ordinary skill in the art. Meanwhile, the terminology used herein is for the purpose of describing particular embodiments and is not intended to limit the present disclosure.

In the following description of the present disclosure, a detailed description of known functions and configurations incorporated herein will be omitted when it may make the subject matter of the present disclosure unclear. The terms used in the specification are defined in consideration of functions used in the present disclosure, and may be changed according to the intent or conventionally used methods of clients, operators, and users.

Accordingly, definitions of the terms should be understood on the basis of the entire description of the present specification.

The functional blocks shown in the drawings and described below are merely examples of possible implementations. Other functional blocks may be used in other implementations without departing from the spirit and scope of the detailed description. In addition, although one or more functional blocks of the present disclosure are represented as separate blocks, one or more of the functional blocks of the present disclosure may be combinations of various hardware and software configurations that perform the same function.

The expression that includes certain components is an open-type expression and merely refers to existence of the corresponding components, and should not be understood as excluding additional components.

It will be understood that when an element is referred to as being "on", "connected to" or "coupled to" another element, it may be directly on, connected or coupled to the other element or intervening elements may be present.

Expressions such as 'first, second', etc. are used only for distinguishing a plurality of components, and do not limit the order or other characteristics between the components.

Hereinafter, embodiments of the present disclosure will be described with reference to the accompanying drawings.

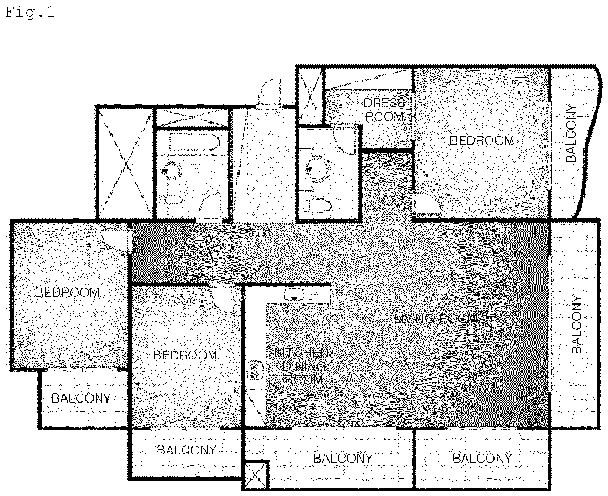

FIG. 1 is an exemplary diagram of a facility floor plan.

Referring to FIG. 1, in the floor plan, both marks of a window and a door are configured in a rectangular shape. In the case in which labeling is performed with a bounding box for learning a neural network that automatically distinguishes the marks of these window and door, labeling is performed only in the form of a rectangle in which it is not possible to rotate the bounding box. If the marks of the door and the window are arranged diagonally on the floor plan, or if the marks of the door and the window are arranged adjacent to other marks, it is not possible to perform accurate labeling, and thus it is difficult to improve the accuracy of neural network learning.

An embodiment of the present disclosure proposes a technology for improving the accuracy of learning for distinguishing a window and a door in a floor plan by automatically distinguishing marks of the door and the window on the floor plan and labeling distinguish door and window regions.

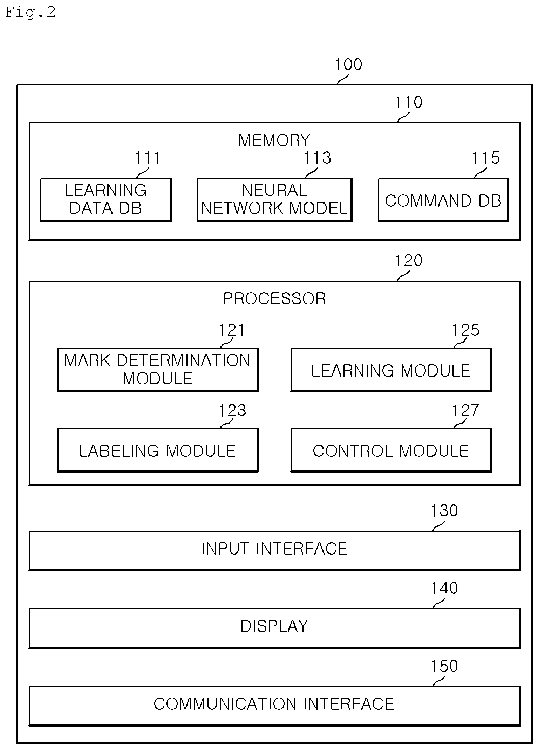

FIG. 2 is a functional block diagram of an apparatus 100 for analyzing a mark in a facility floor plan according to an embodiment of the present disclosure.

Referring to FIG. 2, the apparatus 100 for analyzing a mark in the facility floor plan according to an embodiment may include a memory 110, a processor 120, an input interface 130, a display 140, and a communication interface 150.

The memory 110 may include a learning data DB 111, a neural network model 113, and a command DB 115.

The learning data DB 111 may include a plurality of image files of the facility floor plan. The facility floor plan may be acquired through an external server or an external DB or may be acquired from the Internet. In this case, the facility floor plan may include a plurality of pixels (e.g., M*N pixels in the form of M horizontal and N vertical matrix), and each pixel may include pixel information including RGB element values (x, y, z) representing unique color of R(Red), G(Green), and B(Blue) or HSV information representing hue, saturation, and lightness.

The neural network model 113 may include a neural network model for determining a class and a position of a door/window in the input facility floor plan. The neural network model may be generated by an operation of the processor 120, which is to be described below, and may be stored in the memory 110.

The command DB 115 may store commands for performing an operation of the processor 120. For example, the command DB 115 may store a computer code for performing operations corresponding to the following operations of the processor 120.

The processor 120 may control the overall operation of components included in the apparatus 100 for analyzing a mark in the facility floor plan, the memory 110, the input interface 130, the display 140, and the communication interface 150. The processor 120 may include a mark determination module 121, a labeling module 123, a learning module 125, and a control module 127. The processor 120 may execute commands stored in the memory 110 to drive the mark determination module 121, the labeling module 123, the learning module 125, and the control module 127, and an operation performed by the mark determination module 121, the labeling module 123, the learning module 125, and the control module 127 may be understood as an operation performed by the processor 120.

The mark determination module 121 may specify a window region and a door region in the facility floor plan with respect to each of a plurality of facility floor plans included in the learning data DB 111.

The mark determination module 121 may detect and remove a character included in the facility floor plan based on an algorithm (e.g., OCR detection algorithm) for detecting characters, and convert all parts except black among colors included in the facility floor plan to white. For example, the mark determination module 121 may maintain RGB information for a pixel of which RGB information is (0, 0, 0) of pixels included in the facility floor plan, and convert the RGB information of the pixels included in the facility floor plan into (255, 255, 255) but not (0, 0, 0).

Then, the mark determination module 121 may perform an operation of detecting a rectangle and an arc based on an outline connecting a line segment configured with black or a border of a white region. In this case, when an area of a rectangle is smaller than a preset value or is larger than a preset value, the mark determination module 121 may determine the corresponding rectangle as a rectangle rather than a door or a window and remove the corresponding rectangle from the detection target of the door or the window. Here, a range of the preset value may be determined based on an area of a mark of the door or the window included in the facility floor plan used in learning, and the area of the mark may vary depending on the area of an image of the facility floor plan, the thus the range of the preset value may be determined based on the size of the image of the facility floor plan used for learning.

In addition, when there is a first rectangle connected to an arc among rectangles, if there is a line segment connected to the first rectangle to define a perpendicular line and the arc is connected to an end of the first rectangle and an end of the line segment, the mark determination module 121 may determine the first rectangle as the door region. The mark determination module 121 may determine a second rectangle that is not connected to the arc among rectangles as a window region.

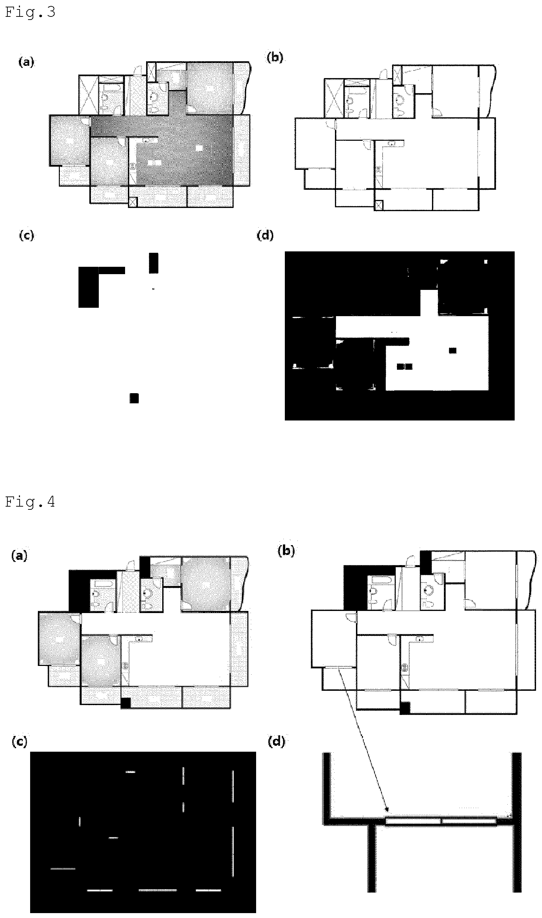

The above-described operation of the mark determination module 121 may be suitable when the facility floor plan corresponds to a high-definition original. An operation of detecting a door and a window from a facility floor plan containing a lot of noise by the mark determination module 121 will be described in more detail later with FIGS. 3 to 5.

The labeling module 123 may label a pixel in the window region specified by the mark determination module 121 with a class of a window, and label a pixel of the door region specified by the mark determination module 121 with a class of a door. In addition, the labeling module 123 may label pixels of all regions except for the window and the door with a class of a null. The labeling module 123 may perform labeling by applying RBG information for the same color to pixel regions corresponding to the same class and applying RGB information for different colors to pixel regions corresponding to different classes. For example, the labeling module 123 may label each class (e.g., window, door, or other regions) by changing pixel information of a pixel region in which a window is positioned to yellow, changing pixel information of a pixel region in which a door is positioned to red, and changing pixel information of the other pixel regions to black in the facility floor plan.

The learning module 125 may input a plurality of facility floor plans and data labeled in units of pixels to a neural network model designed based on an image segmentation algorithm, and learn a weight of the neural network model that derives a correlation between classes of the window and the door included in the plurality of facility floor plans and the position of the labeled pixel, and thus it may be possible to generate a neural network model that determines the positions and classes of the window and the door included in the facility floor plan based on the correlation.

The learning module 125 may be configured to input a plurality of facility floor plans to an input layer of a neural network designed based on the Mask R-CNN algorithm among image segmentation algorithms and input a class of a window/door/background included in the plurality of facility floor plans and the position of the labeled pixel to an output layer, and may perform an operation of learning the weight of the neural network that drives the correlation between the classes of the window and the door included in the plurality of facility floor plans and the position of the labeled pixel.

The control module 127 may input the facility floor plan to the completely learned neural network model to specify regions of the door and the window, and perform 3D modeling based on information and numerical values of space proposed by a 2D floor plan through a technology disclosed in Korean Patent Publication No. 10-1638378, and thus may provide 3D spatial information for the 2D facility floor plan.

The input interface 130 may receive a facility floor plan to be used for learning or detection.

The display 140 may include a hardware configuration for outputting an image, including a display panel.

The communication interface 150 may communicate with an external device to transmit and received information. To this end, the communication interface 150 may include a wireless communication module or a wired communication module.

Hereinafter, the above-described operation of the mark determination module 121 will be described in more detail with reference to FIGS. 3 to 5.

FIGS. 3 to 5 are exemplary diagrams of an operation of detecting and labeling a door and a window by conversion for a facility floor plan by an apparatus for analyzing a mark in a facility floor plan according to an embodiment of the present disclosure.

Referring to FIG. 3A, the mark determination module 121 may generate a first floor plan by removing a character from the facility floor plan through an OCR detection algorithm.

Referring to FIG. 3B, the mark determination module 121 may generate a second floor plan by converting pixel information of the first floor plan using Equations 1 and 2 below in order to convert the first floor plan into black and white color.

[Equation 1]

$$dst(I) = round(\max(0, \min(\alpha * src(I) - \beta, 255)))$$

(src(I): element value before change of pixel information (x, y, z), $\alpha$: 10, $\beta$: -350, dst(I): element value after change of pixel information (x', y', z'))

[Equation 2]

$$Y = 0.5 * R + 0.3334 * G + 0.1667 * B$$

(R: x' of (x', y', z') of dst(I) obtained from Equation 1, G: y' of (x', y', z') of dst(I) obtained from Equation 1, B: z' of (x', y', z') of dst(I) obtained from Equation 1, Y: one-dimensional element value)

With regard to the second floor plan of FIG. 3B converted as such, a black line segment is partially cut, which is because noise is inserted into an image of the facility floor plan and pixel information that is originally a black part is converted by being uploaded/downloaded/compressed to have RGB information with a value that is not (0, 0, 0). Accordingly, the mark determination module 121 may remove noise information through an operation to be described later.

Referring to FIG. 3C, the mark determination module 121 may generate a third floor plan in which a part larger than a preset area or smaller than a preset area among rectangles configured with line segments constituting the second floor plan is displayed in black. The third floor plan may be used to remove regions that are very large or small compared to the regions of the door and the window as an outlier.

Referring to FIG. 3D, the mark determination module 121 may generate a fourth floor plan by converting a pixel having a color element value of 0 or more and 30 or less, a saturation element value of 80 or more and 220 or less, and a brightness element value of 150 or more and 225 or less to white among pixels constituting the first floor plan. The mark determination module 121 may perform a corresponding operation based on HSV information included in the first floor plan, and the HSV information may be converted and derived from RGB information. The fourth floor plan may classify colors based on a border region in which color is abruptly changed.

Referring to FIG. 4A, the mark determination module 121 may generate a fifth floor plan by applying a black region of the third floor plan and the white region of the fourth floor plan to the first floor plan. The third floor plan of FIG. 3C may be applied in order to remove regions that are very large or small compared to the regions of the door and the window as an outlier. Based on the fact that noise is generally generated in a pixel region in which color is abruptly changed, the fourth floor plan of FIG. 3D may be applied to increase a color contrast of the original by classifying colors of the facility floor plan into black and white based on a border in which color is abruptly changed and synthesizing the colors to the first floor plan, thereby reducing an effect of noise, as shown in FIG. 4A.

Referring to FIG. 4B, the mark determination module 121 may generate a sixth floor plan by converting pixel information of the fifth floor plan using Equations 3 to 5 below.

[Equation 3]

$$dst(I) = round(\max(0, \min(\alpha * src(I) - \beta, 255)))$$

(src(I): element value before change of pixel information (x, y, z), α: 3, β: -350, dst(I): element value after change of pixel information (x', y', z'))

[Equation 4]

$$Y=0.5*R+0.3334*G+0.1667*B$$

(R: x' of (x', y', z') of dst(I) obtained from Equation 3, G: y' of (x', y', z') of dst(I) obtained from Equation 3, B: z' of (x', y', z') of dst(I) obtained from Equation 3, Y: one-dimensional element value)

[Equation 5]

$$Y'=(Y<40,Y'=o\text{ or }Y\geq40,Y'=255)$$

(Y: one-dimensional element value obtained Equation 4)

All parts except for a black part may be converted into white in Equation 1, but in contrast, existing color may be polarized to white and black in Equation 3, the polarized color may be converted to grayscale in Equation 4, and the polarized grayscale may be converted into black and white in Equation 5. Thus, it may be seen that, in the generated sixth floor plan of FIG. 4B, all black line segments are converted without being cut off. In this case, the mark determination module 121 may additionally minimize noise by applying a morphology erode operation that reduces the white part in the sixth floor plan.

Referring to FIGS. 4C and 4D, the mark determination module 121 may detect a rectangle region corresponding to a mark of a window or a door in the facility floor plan by generating an outline connecting borders of the white region of the sixth floor plan.

When a shape formed by the outline is a rectangle, the mark determination module 121 may determine a rectangle corresponding to a window or door region based on the area of the rectangle or a ratio of width/length of the rectangle.

For example, based on the case in which an image width of the facility floor plan is 923 and an image height is 676 (since numbers may be replaced with ratios, units are omitted), under the following conditions, a white region may be excluded in FIG. 4B, and a rectangular region corresponding to a door or a window may be detected as shown in FIG. 4C.

a. Except when the area formed by the outline is greater than 1,000
b. Except when the minimum width or height of the rectangle formed by the outline is greater than 10.
c. Except when the area of a shape formed by the outline is abnormally small (e.g., 40 or less)
d. Except when the width of the minimum unit rectangle formed by the outline and the width of the shape formed by the outline are different than a margin of error
e. Except when a ratio of the width and height of the minimum unit rectangle formed by the outline is x:1 (x being 0.5 or more and 2 or less)

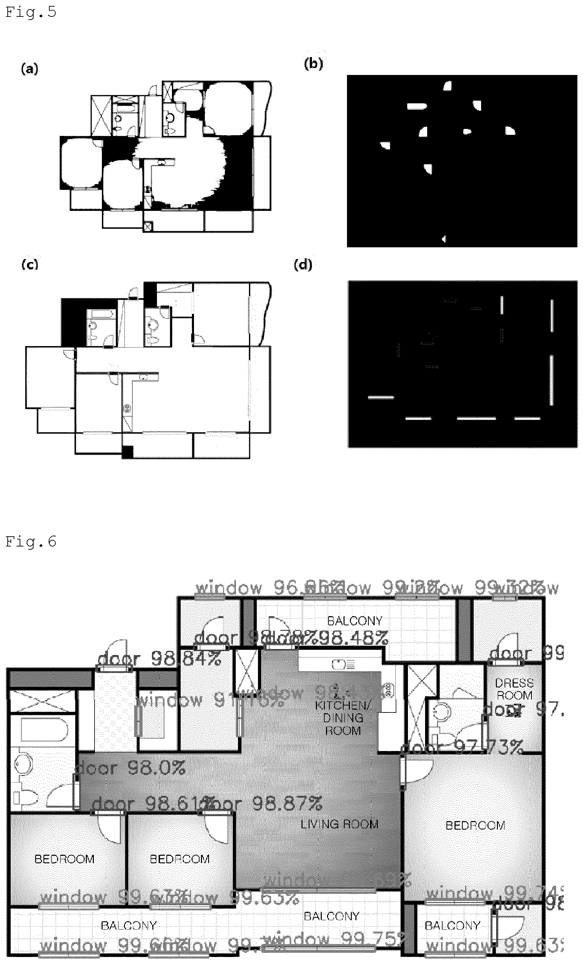

Referring to FIG. 5A, the mark determination module 121 may generate a seventh floor plan by converting pixel information of the second floor plan using Equations 6 to 8 below.

[Equation 6]

$$dst(I)=round(\max(0,\min(\alpha*src(I)-\beta,255)))$$

(src(I): element value before change of pixel information (x, y, z), α: 57, β: -12,500, dst(I): element value after change of pixel information (x', y', z'))

[Equation 7]

$$Y = 0.5*R + 0.3334*G + 0.1667*B$$

(R: x' of (x', y', z') of dst(I) obtained from Equation 6, G: y' of (x', y', z') of dst(I) obtained from Equation 6, B: z' of (x', y', z') of dst(I) obtained from Equation 6, Y: one-dimensional element value)

[Equation 8]

$$Y' = (Y = 0, Y' = o \text{ or } Y \neq 0, Y' = 255)$$

(Y: one-dimensional element value obtained Equation 7)

Color of pixel information may be polarized based on color and saturation of the facility floor plan in Equation 6, the polarized color may be converted into a grayscale in Equation 7, and the grayscale may be converted into black and white in Equation 8.

Referring to FIG. 5B, the mark determination module 121 may generate an outline connecting borders of the white region of the seventh floor plan, may approximate the outline of a sizzling shape based on the Douglas-Peucker algorithm (e.g., the epsilon index of the Douglas-Peucker algorithm is a value corresponding to 0.02 = 1/50 of the total length of the outline) to smoothly transform the outline, may then detect an outline corresponding to a convex hull among the approximated outlines, and may detect the outline as an arc when the area formed by the outline is within a predetermined range. For example, when the area of the convex hull is greater than 200 and less than 800 and the number of the approximated outline points is 10 or less, the outline may be detected as an arc.

Referring to FIG. 5B, among the detected rectangles in FIG. 4C, the mark determination module 121 may detect a rectangle adjacent to the arc of FIG. 5B as a door, and detect the other rectangle as a window, and the labeling module 123 may perform labeling based on the detected information.

Referring to FIG. 5D, the learning module 125 may input a plurality of facility floor plans (FIG. 1) and data labeled in units of pixels (FIG. 5D) to a neural network model based on an image segmentation algorithm, and may learn a weight of the neural network model that derives a correlation between the classes of the window and the door included in the plurality of facility floor plans and the position of the labeled pixel, and thus may generate a neural network model for determining the positions and classes of a window and a door included in the facility floor plan based on the correlation.

FIG. 6 is an exemplary diagram showing the result of distinguishing a door and a window from a facility floor plan by a neural network model generated by the apparatus 100 for analyzing a mark in the facility floor plan according to an embodiment of the present disclosure.

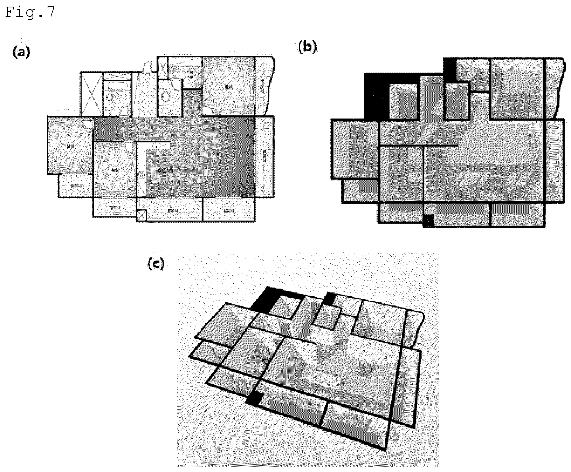

As seen from FIG. 6, the positions of the door and the window included in a new floor plan input to the neural network model may be detected in units of pixels, and the classes of the door and the window may also be detected with high accuracy. The neural network model may be combined with the technology of Korean Patent No. 10-1638378 as shown in FIG. 7.

FIG. 7 is an exemplary diagram of a 3D drawing on which 3D modeling is performed from a 2D floor plan using a neural network model generated by the apparatus 100 for analyzing a mark in the facility floor plan according to an embodiment of the present disclosure and the technology of Korean Patent No. 10-1638378.

Referring to FIG. 7, the apparatus 100 for analyzing a mark in the facility floor plan according to an embodiment of the present disclosure may generate a model for accurately distinguishing a window and a door on a floor plan by automatically distinguishing marks of the door and the window on the floor plan and labeling the distinguished door and window in units of pixels, and combine the model with the technology of Korean Patent No. 10-1638378 (3D automatic modeling methods and program based on 2D drawing), and thus may accurately distinguishing the door and the window of the 2D floor plan (FIG. 7A) to perform effective 3D modeling (FIGS. 7B and 7C).

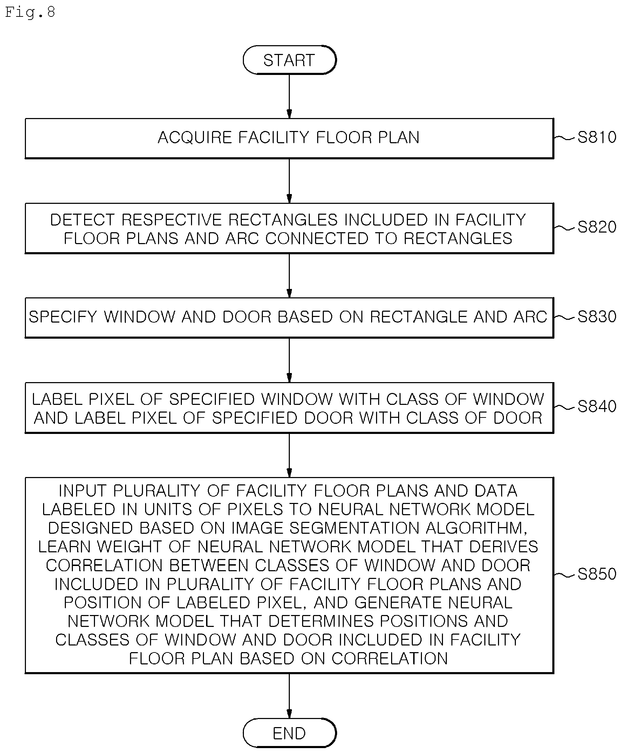

FIG. 8 is a flowchart of a method of analyzing a mark in a facility floor plan according to an embodiment of the present disclosure. Each step of the method of analyzing a mark in a facility floor plan in FIG. 8 may be performed by the apparatus 100 for analyzing a mark in the facility floor plan described with reference to FIG. 1, and each step will described as follows.

The input interface 130 may acquire a plurality of facility floor plans (S810). The mark determination module 121 may detect respective rectangles included in the plurality of facility floor plans and an arc connected to the rectangles (S820). The mark determination module 121 may specify a window region and a door region based on the rectangle and the arc (S830). The labeling module 123 may label a pixel of the specified window region with a class of a window, and label a pixel of the specified door region with a class of a door (S840). The learning module 125 may input a plurality of facility floor plans and data labeled in units of pixels to a neural network model designed based on an image segmentation algorithm, and learn a weight of the neural network model that derives a correlation between classes of the window and the door included in the plurality of facility floor plans and the position of the labeled pixel, and thus may generate a neural network model that determines the positions and classes of the window and the door included in the facility floor plan based on the correlation (S850).

Since the procedure for performing corresponding operations by components as subjects of the respective operations described above has been described above with reference to FIGS. 1 to 7, a repeated description will be omitted.

According to an embodiment of the present disclosure, a model for accurately distinguishing a window and a door on a floor plan may be generated by automatically distinguishing marks of the door and the window on the floor plan and labeling regions of the distinguished door and window in units of pixels.

When the image segmentation model generated according to an embodiment of the present disclosure is used with the technology disclosed in Korean Patent No. 10-1638378 (3D automatic modeling methods and program based on 2D drawing), effective 3D modeling may be performed by more accurately distinguishing the door and the window of the 2D floor plan.

Various effects that are directly or indirectly identified through the present disclosure may be provided.

The embodiments of the present disclosure may be achieved by various means, for example, hardware, firmware, software, or a combination thereof.

In a hardware configuration, an embodiment of the present disclosure may be achieved by one or more application specific integrated circuits (ASICs), digital signal processors (DSPs), digital signal processing devices (DSDPs ), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

Combinations of blocks in the block diagram attached to the present disclosure and combinations of operations in the flowchart attached to the present disclosure may be performed by computer program instructions. These computer program instructions may be installed in an encoding processor of a general purpose computer, a special purpose computer, or other programmable data processing equipment, and thus the instructions executed by an encoding processor of a computer or other programmable data processing equipment may create means for perform the functions described in the blocks of the block diagram or the operations of the flowchart. These computer program instructions may also be stored in a computer-usable or computer-readable memory that may direct a computer or other programmable data processing equipment to implement a function in a particular method, and thus the instructions stored in the computer-usable or computer-readable memory may produce an article of manufacture containing instruction means for performing the functions of the blocks of the block diagram or the operations of the flowchart. The computer program instructions may also be mounted on a computer or other programmable data processing equipment, and thus a series of operations may be performed on the computer or other programmable data processing equipment to create a computer-executed process, and it may be possible that the computer program instructions provide the blocks of the block diagram and the operations for performing the functions described in the operations of the flowchart.

Each block or each step may represent a module, a segment, or a portion of code that includes one or more executable instructions for executing a specified logical function. It should also be noted that it is also possible for functions described in the blocks or the operations to be out of order in some alternative embodiments. For example, it is possible that two consecutively shown blocks or operations may be performed substantially and simultaneously, or that the blocks or the operations may sometimes be performed in the reverse order according to the corresponding function.

As such, those skilled in the art to which the present disclosure pertains will understand that the present disclosure may be embodied in other specific forms without changing the technical spirit or essential characteristics thereof. Therefore, it should be understood that the embodiments described above are illustrative in all respects and not restrictive. The scope of the present disclosure is defined by the following claims rather than the detailed description, and all changes or modifications derived from the meaning and scope of the claims and their equivalent concepts should be construed as being included in the scope of the present disclosure.

**Claims**

1. An apparatus of analyzing a mark in a facility floor plan, the apparatus comprising:

   one or more memories configured to store commands for performing a predetermined operation; and
   one or more processors operatively connected to the one or more memories and configured to execute the commands,
wherein an operation perform by the processor includes:

> acquiring a plurality of facility floor plans;
> detecting respective rectangles included in the plurality of facility floor plans and an arc connected to the rectangles;
> specifying a window region and a door region based on the rectangle and the arc;
> labeling a pixel of the specified window region with a class of a window and labeling a pixel of the specified door region with a class of a door; and
> inputting the plurality of facility floor plans and data labeled in units of pixels to a neural network model designed based on a predetermined image segmentation algorithm, learning a weight of the neural network model that derives a correlation between classes of the window and the door included in the plurality of facility floor plans and a positioned of the labeled pixel, and generating a neural network model for determining positions and classes of the window and the door included in the facility floor plan based on the correlation.

2. The apparatus of claim 1, wherein the detecting includes:

> converting all part except for black included in the facility floor plan into white; and
> detecting the rectangle and the arc based on an outline connecting a line segment configured with black or a border of a white region.

3. The apparatus of claim 2, wherein the detecting further includes removing a character from the facility floor plan.

4. The apparatus of claim 2, wherein the converting includes maintaining RGB information for a pixel of which RGB information is (0, 0, 0) of pixels included in the facility floor plan and converting the RGB information of the pixels included in the facility floor plan into (255, 255, 255) but not (0, 0, 0).

5. The apparatus of claim 1, wherein the specifying the window region and the door region includes:

> detecting a first rectangle connected to the arc among the rectangles as a door region; and
> detecting a second rectangle that is not connected to the arc among the rectangles as a window region.

6. The apparatus of claim 5, wherein the detecting as the door region includes detecting the first rectangle as the door region when a line segment connected to the first rectangle to define a perpendicular line and the arc is connected to an end of the first rectangle and an end of the line segment.

7. The apparatus of claim 5, wherein the specifying the window region and the door region includes removal from the detecting when an area of the rectangle is smaller than a preset value or is larger than a preset value.

8. The apparatus of claim 1, wherein the labeling includes labeling pixels of all regions except for the window and the door with a class of null.

9. The apparatus of claim 1, wherein the detecting includes:

> generating a first floor plan by removing a character from the facility floor plan through an OCR detection algorithm;
> generating a second floor plan by converting pixel information of the first floor plan using Equations 1 and 2 below:

[Equation 1]

$$dst(I) = round(\max(0, \min(\alpha * src(I) - \beta, 255)))$$

(src(I): element value before change of pixel information (x, y, z), $\alpha$: 10, $\beta$: -350, dst (I) : element value after change of pixel information (x', y', z')), and

[Equation 2]

$$Y = 0.5*R + 0.3334*G + 0.1667*B$$

(R: x' of (x', y', z') of dst(I) obtained from Equation 1, G: y' of (x', y', z') of dst(I) obtained from Equation 1, B: z' of (x', y', z') of dst(I) obtained from Equation 1, Y: one-dimensional element value);

generating a third floor plan in which a part larger than a preset area or smaller than a preset area among rectangles configured with line segments constituting the second floor plan is displayed in black;

generating a fourth floor plan by converting a pixel having a color element value of 0 or more and 30 or less, a saturation element value of 80 or more and 220 or less, and a brightness element value of 150 or more and 225 or less to white among pixels constituting the first floor plan;

generating a fifth floor plan by applying a black region of the third floor plan and a white region of the fourth floor plan to the first floor plan; and

generating a sixth floor plan by converting pixel information of the fifth floor plan using Equations 3 to 5 below:

[Equation 3]

$$dst(I) = round(max(0, min(\alpha * src(I) - \beta, 255)))$$

(src(I): element value before change of pixel information (x, y, z), $\alpha$: 3, $\beta$: -350, dst(I): element value after change of pixel information (x', y', z')),

[Equation 4]

$$Y = 0.5*R + 0.3334*G + 0.1667*B$$

(R: x' of (x', y', z') of dst(I) obtained from Equation 3, G: y' of (x', y', z') of dst(I) obtained from Equation 3, B: z' of (x', y', z') of dst(I) obtained from Equation 3, Y: one-dimensional element value), and

[Equation 5]

$$Y' = (Y < 40, Y' = o \text{ or } Y \geq 40, Y' = 255)$$

(Y: one-dimensional element value obtained Equation 4); and

generating an outline connecting borders of a white region of the sixth floor plan and detecting a rectangle.

**10.** The apparatus of claim 1, wherein the detecting includes:

generating a first floor plan by removing a character from the facility floor plan through an OCR detection algorithm;

generating a seventh floor plan by converting pixel information of the second floor plan using Equations 6 to 8 below:

[Equation 6]

$$dst(I) = round(max(0, min(\alpha * src(I) - \beta, 255)))$$

(src(I): element value before change of pixel information (x, y, z), $\alpha$: 57, $\beta$: -12500, dst(I): element value after change of pixel information (x', y', z')),

[Equation 7]

$$Y = 0.5*R + 0.3334*G + 0.1667*B$$

(R: x' of (x', y', z') of dst(I) obtained from Equation 6, G: y' of (x', y', z') of dst(I) obtained from Equation 6, B: z' of (x', y', z') of dst(I) obtained from Equation 6, Y: one-dimensional element value), and

[Equation 8]

$$Y' = (Y=0, Y'=o \text{ or } Y \neq 0, Y'=255)$$

(Y: one-dimensional element value obtained Equation 7);
generating an outline connecting borders of the white region of the sixth floor plan; and
approximating the outline based on a Douglas-Peucker algorithm, detecting an outline corresponding to a convex hull among the approximated outlines, and detecting the outline as an arc when an area formed by the convex hull is within a predetermined range.

11. The apparatus of claim 1, wherein the generating the neural network model includes:
configuring the apparatus to input the plurality of facility floor plans to an input layer of a neural network designed based on a Mask R-CNN algorithm and input classes of a window and a door included in the plurality of facility floor plans and a position of the labeled pixel to an output layer, and learning a weight of a neural network that derives a correlation between the classes of the window and the door included in the plurality of facility floor plans and the position of the labeled pixel.

12. An apparatus including a neural network model generated by the apparatus of any one of claims 1 to 11.

13. A method performed by an apparatus of analyzing a mark in a facility floor plan, the method comprising:

acquiring a plurality of facility floor plans;
detecting respective rectangles included in the plurality of facility floor plans and an arc connected to the rectangles;
specifying a window region and a door region based on the rectangle and the arc;
labeling a pixel of the specified window region with a class of a window and labeling a pixel of the specified door region with a class of a door; and
inputting the plurality of facility floor plans and data labeled in units of pixels to a neural network model designed based on a predetermined image segmentation algorithm, learning a weight of the neural network model that derives a correlation between classes of the window and the door included in the plurality of facility floor plans and a positioned of the labeled pixel, and generating a neural network model for determining positions and classes of the window and the door included in the facility floor plan based on the correlation.

14. A computer readable recording medium for causing a processor to perform the method of claim 13.

Fig.1

Fig.2

100

110

MEMORY

| 111 | 113 | 115 |
|---|---|---|
| LEARNING DATA DB | NEURAL NETWORK MODEL | COMMAND DB |

120

PROCESSOR

| 121 | 125 |
|---|---|
| MARK DETERMINATION MODULE | LEARNING MODULE |

| 123 | 127 |
|---|---|
| LABELING MODULE | CONTROL MODULE |

130

INPUT INTERFACE

140

DISPLAY

150

COMMUNICATION INTERFACE

Fig.3

(a)

(b)

(c)

(d)

Fig.4

(a)

(b)

(c)

(d)

Fig.5

(a)

(b)

(c)

(d)

Fig.6

Fig.7

**(a)**

**(b)**

**(c)**

Fig.8

```
                    ╭──────────╮
                    │  START   │
                    ╰──────────╯
                         │
                         ▼
    ┌──────────────────────────────────────────────┐
    │        ACQUIRE FACILITY FLOOR PLAN             │──S810
    └──────────────────────────────────────────────┘
                         │
                         ▼
    ┌──────────────────────────────────────────────┐
    │  DETECT RESPECTIVE RECTANGLES INCLUDED IN      │──S820
    │  FACILITY FLOOR PLANS AND ARC CONNECTED        │
    │  TO RECTANGLES                                 │
    └──────────────────────────────────────────────┘
                         │
                         ▼
    ┌──────────────────────────────────────────────┐
    │ SPECIFY WINDOW AND DOOR BASED ON RECTANGLE     │──S830
    │ AND ARC                                        │
    └──────────────────────────────────────────────┘
                         │
                         ▼
    ┌──────────────────────────────────────────────┐
    │ LABEL PIXEL OF SPECIFIED WINDOW WITH CLASS OF  │──S840
    │ WINDOW AND LABEL PIXEL OF SPECIFIED DOOR WITH  │
    │ CLASS OF DOOR                                  │
    └──────────────────────────────────────────────┘
                         │
                         ▼
    ┌──────────────────────────────────────────────┐
    │   INPUT PLURALITY OF FACILITY FLOOR PLANS AND  │
    │   DATA LABELED IN UNITS OF PIXELS TO NEURAL    │
    │   NETWORK MODEL DESIGNED BASED ON IMAGE        │
    │   SEGMENTATION ALGORITHM, LEARN WEIGHT OF      │
    │   NEURAL NETWORK MODEL THAT DERIVES            │
    │   CORRELATION BETWEEN CLASSES OF WINDOW AND    │──S850
    │   DOOR INCLUDED IN PLURALITY OF FACILITY       │
    │   FLOOR PLANS AND POSITION OF LABELED PIXEL,   │
    │   AND GENERATE NEURAL NETWORK MODEL THAT       │
    │   DETERMINES POSITIONS AND CLASSES OF WINDOW   │
    │   AND DOOR INCLUDED IN FACILITY FLOOR PLAN     │
    │   BASED ON CORRELATION                         │
    └──────────────────────────────────────────────┘
                         │
                         ▼
                    ╭──────────╮
                    │   END    │
                    ╰──────────╯
```

**EP 4 184 351 A1**

## INTERNATIONAL SEARCH REPORT

| International application No. |
|---|
| **PCT/KR2021/009480** |

**A.    CLASSIFICATION OF SUBJECT MATTER**

**G06K 9/00**(2006.01)i; **G06K 9/46**(2006.01)i; **G06N 3/08**(2006.01)i; **G06T 5/00**(2006.01)i; **G06T 7/11**(2017.01)i

According to International Patent Classification (IPC) or to both national classification and IPC

**B.    FIELDS SEARCHED**

Minimum documentation searched (classification system followed by classification symbols)

G06K 9/00(2006.01); G06K 9/46(2006.01); G06K 9/62(2006.01); G06N 20/00(2019.01); G06N 99/00(2010.01); G06Q 30/02(2012.01); G06Q 50/08(2012.01); G06T 17/00(2006.01); G06T 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 평면도(floor plan), 창문(window), 신경망(neural network), 픽셀(pixel), 레이블링 (labeling)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2017-0115738 A (LEE, Jusung et al.) 18 October 2017 (2017-10-18)<br>See paragraphs [0029]-[0154] and figures 1-27. | 1-3,5-8,11-14 |
| A | | 4,9-10 |
| Y | OR, Siu-Hang et al. Highly Automatic Approach to Architectural Floorplan Image Understanding & Model Generation. November 2005. [Retrieved on 12 October 2021]. Retrieved from <URL:http://www.cse.cuhk.edu.hk/~shor/project/building/vmv05.pdf>.<br>See pages 1-9 and figures 1-5. | 1-3,5-8,11-14 |
| Y | KR 10-2019-0080904 A (SNAP INC.) 08 July 2019 (2019-07-08)<br>See paragraphs [0009]-[0135] and figures 1-11. | 1-3,5-8,11-14 |
| Y | KR 10-2017-0109927 A (ARCHIDRAW. INC.) 10 October 2017 (2017-10-10)<br>See paragraphs [0039]-[0041] and figures 2-4 and 8-9. | 7 |

✓ Further documents are listed in the continuation of Box C.          ✓ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 October 2021** | **28 October 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/009480** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2016-0064784 A (URBANBASE INC.) 08 June 2016 (2016-06-08)<br>See claim 1 and figures 1-6. | 1-14 |
| PX | KR 10-2208694 B1 (URBANBASE INC.) 28 January 2021 (2021-01-28)<br>See claims 1, 3, 5-8 and 10-14 and figures 1-8.<br>** This document is a published earlier application that serves as a basis for claiming priority of the present international application. | 1-14 |

Form PCT/ISA/210 (second sheet) (July 2019)

Form PCT/ISA/210 (patent family annex) (July 2019)

**INTERNATIONAL SEARCH REPORT**
Information on patent family members

International application No.

**PCT/KR2021/009480**

| Patent document cited in search report | | | Publication date (day/month/year) | Patent family member(s) | | | Publication date (day/month/year) |
|---|---|---|---|---|---|---|---|
| KR | 10-2017-0115738 | A | 18 October 2017 | KR | 10-2021-0098929 | A | 11 August 2021 |
| | | | | KR | 10-2294421 | B1 | 26 August 2021 |
| KR | 10-2019-0080904 | A | 08 July 2019 | CN | 109964236 | A | 02 July 2019 |
| | | | | EP | 3535692 | A1 | 11 September 2019 |
| | | | | KR | 10-2021-0024242 | A | 04 March 2021 |
| | | | | KR | 10-2222642 | B1 | 05 March 2021 |
| | | | | US | 10346723 | B2 | 09 July 2019 |
| | | | | US | 10872276 | B2 | 22 December 2020 |
| | | | | US | 2018-0121762 | A1 | 03 May 2018 |
| | | | | US | 2019-0279046 | A1 | 12 September 2019 |
| | | | | US | 2021-0073597 | A1 | 11 March 2021 |
| | | | | WO | 2018-085425 | A1 | 11 May 2018 |
| KR | 10-2017-0109927 | A | 10 October 2017 | KR | 10-2145726 | B1 | 19 August 2020 |
| | | | | US | 10977527 | B2 | 13 April 2021 |
| | | | | US | 2021-0004652 | A1 | 07 January 2021 |
| | | | | WO | 2017-164554 | A1 | 28 September 2017 |
| KR | 10-2016-0064784 | A | 08 June 2016 | CN | 107004297 | A | 01 August 2017 |
| | | | | CN | 107004297 | B | 09 October 2020 |
| | | | | EP | 3226211 | A1 | 04 October 2017 |
| | | | | EP | 3226211 | B1 | 01 July 2020 |
| | | | | JP | 2018-503174 | A | 01 February 2018 |
| | | | | JP | 6490220 | B2 | 27 March 2019 |
| | | | | KR | 10-1638378 | B1 | 11 July 2016 |
| | | | | US | 10565788 | B2 | 18 February 2020 |
| | | | | US | 10803659 | B2 | 13 October 2020 |
| | | | | US | 2017-0263050 | A1 | 14 September 2017 |
| | | | | US | 2020-0126293 | A1 | 23 April 2020 |
| | | | | WO | 2016-085121 | A1 | 02 June 2016 |
| KR | 10-2208694 | B1 | 28 January 2021 | None | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101638378